# EUROPÄISCHE PATENTANMELDUNG

(11) **EP 3 122 015 A1**
(43) Veröffentlichungstag der Anmeldung: **25.01.2017**
(21) Anmeldenummer: 15177814.9
(22) Anmeldetag: 22.07.2015
(51) Int. Cl.: H04L 29/06, G06F 17/30

(54) **VERFAHREN ZUR DARSTELLUNG VON WEB-SEITEN AN EINEM COMPUTERARBEITSPLATZ EINES SICHERHEITSKRITISCHEN COMPUTERSYSTEMS**

(71) Anmelder: Siemens Schweiz AG, 8047 Zürich (CH)
(72) Erfinder: RIEDWEG, Dominik, 8400 Winterthur (CH)
(74) Vertreter: Maier, Daniel Oliver

(57) **Zusammenfassung**

Erfindungsgemäss ist ein Verfahren zur Darstellung von Web-Seiten (2) an einem Computerarbeitsplatz (4) eines Computernetzwerks (14) zur Steuerung und/oder Bedienung einer kritischen Infrastruktur (10) offenbart, umfassend die folgenden Verfahrensschritte:
a) Aufrufen eines Web-Browsers an dem Computerarbeitsplatz (4) und Eingabe eines eine gewünschte Web-Seite repräsentierenden Zeichenstrings;
b) Übermitteln dieses Zeichenstrings von einem Web-Server (6) des Computernetzwerkes (14) an ein externes Computersystem (16);
c) Ausführen eines Programms auf dem externen Computersystem (16), das die dem Zeichenstring zugeordnete Seite aus dem Internet lädt, in einen in einer vektorbasierten Seitenbeschreibungssprache kodierten Datensatz transformiert und den Datensatz an den Web-Server (6) des Computernetzwerkes (14) überträgt;
und
d) Darstellen des Datensatzes auf eines Anzeigegerät des Computerarbeitsplatzes (4).

Somit können die gewünschten Webseiten aus dem Internet mittels des externen Computersystems abgerufen werden, wobei dieses externe Computersystem innerhalb des Betriebs des Betreibers der kritischen Infrastruktur angeordnet sein kann. Aufgrund der Konvertierung wird die gewünschte Webseite nicht in Form einer Webseite (mit Cookies, ActiveX-Elementen und dergleichen) auf dem Anzeigegerät dargestellt, sondern als hinsichtlich der Datensicherheit deutlich problemloseres Bild.

## Beschreibung

Die vorliegende Erfindung bezieht sich auf ein Verfahren zur Darstellung von Web-Seiten an einem Computerarbeitsplatz eines Computernetzwerks zur Steuerung und/oder Bedienung einer kritischen Infrastruktur.

Kritische Infrastrukturen, wie zum Beispiel Leitsysteme für den Schienenverkehr und den Luftverkehr, für Industrieanlagen und Kraftwerke, verfügen über Computernetzwerke mit einer Reihe von Computerarbeitsplätzen. Diese Computerarbeitsplätze dienen zum Beispiel in der Engineering-Phase zur Erstellung von Prozessmodellen und zur Planung der Produktion und in einer Business-Phase zum Beispiel zur konkreten Steuerung und Überwachung der Infrastruktur. In einem Leitsystem eines Eisenbahnnetzwerkes wird beispielsweise der Zuglauf geplant, Fahrstrasseninformationen an Stellwerke übergeben und die Zugorte sowie Fortbewegung der Züge und die eingestellten Fahrstrassen überwacht und sicher angezeigt.

In derartigen Computernetzwerken für kritische Infrastrukturen wird aktuell oft auf einen Internetzugang verzichtet, obwohl beispielsweise Wetterdaten, Finanzdaten und dergleichen für die Steuerung der Infrastruktur von Bedeutung sein können. Dieser Verzicht gründet sich im Wesentlichen auf die grosse Gefahr für die Integrität des Computernetzwerkes, die von Hackern und Schädlingen, wie Würmer und Viren, ausgeht. Ein zusätzliche Gefahrenkomponente steht weiter darin, dass der Browser, das Betriebssystem und auch ein allfällig vorhandener Virenscanner oft nicht auf dem neuesten Patch-Stand oder sogar seit Jahren veraltet sind. Dies ist vor allen Dingen dem Umstand geschuldet, dass diese Computernetzwerke und Steuerungssystem oft eine lange Lebensdauer haben und jeder Eingriff mit erheblichen Kosten und zum Teil neuen Zulassungen verbunden ist.

Eine mögliche Lösung für dieses Problem besteht in Firmen, die gegen Entgelt sogenannten Tarnkappen-Browser anbieten, bei denen diese Browser Web-Inhalte in einer Sandbox in einem externen Computernetzwerk rendern. Das gerenderte DOM (Document Object Model) wird ohne die Inhalte, die den Benutzer identifieren oder sein Computernetzwerk gefährden könnten, in das Computernetzwerk zurückgestreamt. So werden Cookies nur auf dem Server des externen Computernetzwerks gesetzt und auch JavaScript nur dort ausgeführt sowie die IP-Adressen im sicherheitskritischen Computernetzwerk nach aussen hin verschleiert. Nachteilig ist hier u.a., dass der Owner des sicherheitskritischen Computernetzwerks seine Daten an einen Dritten gibt und zum Beispiel auch Verstösse gegen allgemeine Geschäftsbedingungen von Banken auftreten können, wenn Online-Banking über derartige Dienste betrieben wird.

Der vorliegenden Erfindung liegt daher die Aufgabe zugrunde, ein Verfahren zur Darstellung von Web-Seiten an einem Computerarbeitsplatz eines Computernetzwerks zur Steuerung und/oder Bedienung einer kritischen Infrastruktur anzugeben, bei dem keine Gefahr für das sicherheitsrelevante Computernetzwerk durch Schädlinge oder Hacker oder veraltete Softwarekomponenten bei dem Laden von Inhalten aus dem Internet bestehen. Zudem soll dieses Verfahren auch verhindern, dass Dritte Kenntnis über die gesuchten Inhalte und sonstwie vertrauliche Inhalte erhalten können.

Die Aufgabe wird erfindungsgemäss durch ein Verfahren zur Darstellung von Web-Seiten an einem Computerarbeitsplatz eines Computersystems zur Steuerung und/oder Bedienung einer kritischen Infrastruktur (10), umfassend die folgenden Verfahrensschritte:
a) Aufrufen eines Web-Browsers an dem Computerarbeitsplatz und Anwahl einer gewünschten Web-Seite;
b) Übermitteln der Anwahl von einem Web-Server des Computersystems (14) an ein externes Computersystem;
c) Ausführen eines Programms auf dem externen Computersystem, das die der Anwahl zugeordnete Seite aus dem Internet lädt, in einen in einer pixel-oder vektorbasierten Seitenbeschreibungssprache kodierten Datensatz transformiert und den Datensatz an den Web-Server des Computersystems überträgt; und
d) Darstellen des Datensatzes auf eines Anzeigegerät des Computerarbeitsplatzes.

Somit kann die gewünschte Webseite aus dem Internet mittels des externen Computersystems abgerufen werden, wobei dieses externe Computersystem innerhalb des Betriebs des Betreibers der kritischen Infrastruktur angeordnet sein kann. Aufgrund der Konvertierung wird die gewünschte Webseite nicht in Form einer Webseite (mit Cookies, ActiveX-Elementen und dergleichen) auf dem Anzeigegerät dargestellt, sondern als hinsichtlich der Datensicherheit deutlich problemloseres Bild. Es angemerkt, dass mit dem Begriff "Web-Browser" jede Art von Programm gemeint sein kann, die eine Web-Browser üblicherweise innewohnende Grundfunktionalität aufweist. So kann beispielsweise als Web-Browser auch eine proprietäre Anwendung mit vergleichbarer Browser-Grundfunktionalität verwendet sein.

Damit beispielsweise auch auf Mausklicks eines Benutzers reagiert werden kann, kann es vorgesehen sein, den Datensatz von dem Web-Server des Computersystems mit einem Skript zu ergänzen. So können die Mausklicks an den Web-Server des sicherheitskritischen Computersystems übertragen und von dort an das externe Computernetzwerk ausgegeben werden. Das externe Computernetzwerk kann diese Mausklicks auswerten und dem angeklickten Link folgen und die entsprechend geladene Webseite dann wieder als Bild zurückliefern. Auf diese Weise könnte sogar ein gewisser Surf-Komfort erzielt werden.

Hinsichtlich der vektorbasierten Seitenbeschreibungssprache kann es wegen der weiten Verbreitung und der sicheren Funktionalität sinnvoll sein, wenn die vektorbasierte Seitenbeschreibungssprache nach dem Portable Document Format - kurz auch "PDF" genannt kodiert. Als pixelbasierte Seitenbeschreibungssprache kann beispielsweise eine Bitmap-erzeugende Sprache verwendet werden, wie z.B. *.bmp oder *.tif oder auch ein Video-Codex.

Eine Anwahl der gewünschten Web-Seite kann auf diversen Wegen erfolgen. Im Rahmen der vorliegenden Erfindung kann es vorgehen sein, dass die Anwahl einer gewünschten Web-Seite durch die Eingabe eines die gewünschte Web-Seite repräsentierenden Zeichenstrings oder durch das Anklicken eines Links oder Auswahl eines Favoriten oder die Einbindung der gewünschten Web-Seite als Teil einer anderen Web-Seite und deren Aufruf (selbst innerhalb der kritischen Infrastruktur bzw. deren Computersystem) vorgenommen wird.

Weitere vorteilhafte Ausgestaltungen der vorliegenden Erfindung sind den übrigen Unteransprüchen zu entnehmen.

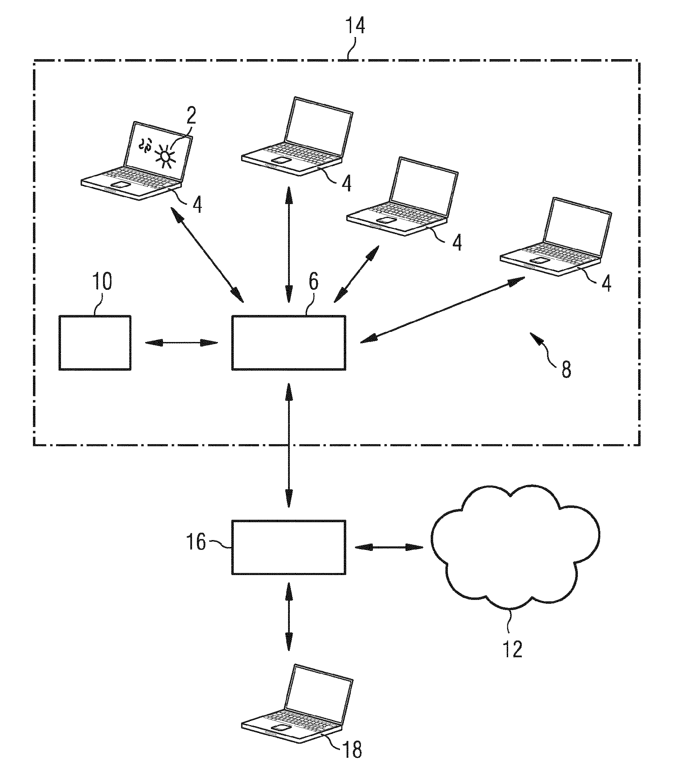

Vorteilhafte Ausführungsbeispiele der vorliegenden Erfindung werden anhand der Zeichnung näher erläutert. Dabei zeigt die Figur in schematischer Ansicht den Ablauf des Verfahrens zur Darstellung von einer Web-Seite 2 an einem Computerarbeitsplatz 4 eines mit einem Server 6 ausgestatteten Computernetzwerks (Computersystem) 8 zur Steuerung und/oder Bedienung einer kritischen Infrastruktur 10. Hier zum Beispiel die kritische Infrastruktur 10 für eine Eisenbahnnetzwerk, das von einem mehrere Computerarbeitsplätze 4 umfassenden Leitsystem gesteuert und überwacht wird. Das Computernetzwerk 8 hat im vorliegenden Ausführungsbeispiel keine direkte Verbindung zum Internet 12, was durch einen gestrichelt eingezeichneten Rahmen 14 symbolisiert sein soll.

Benötigt nun ein Computerarbeitsplatz 4 Inhalte aus dem Internet 12, wird ein Web-Browsers an dem Computerarbeitsplatz 4 aktiviert und ein die gewünschte Web-Seite repräsentierender Zeichenstring am Computerarbeitsplatz 4 eingegeben (z.B. der URL der Web-Seite). Dieser Zeichenstrings wird von dem (Web-)Server 6 des Computernetzwerkes 8 an ein externes Computersystem 16 übertragen, das optional auch einen Computerarbeitsplatz 18 umfassen kann. Auf dem externen Computersystem 16 oder auf dem Computerarbeitsplatz 18 des externen Computersystems 16 wird ein Programm ausgeführt, das die dem Zeichenstring zugeordnete Seite aus dem Internet lädt. Dieses Programm konvertiert dann die geladenen Seite mit Hilfe einer vektorbasierten Seitenbeschreibungssprache in einen entsprechend kodierten Datensatz, der zum Beispiel eine pdf-Datei sein kann. Dieser Datensatz wird anschliessend an den Web-Server 6 des Computernetzwerkes 14 übertragen und auf dem Anzeigegerät des Computerarbeitsplatzes 4 in Form eines in ein Bild umwandelte Webseite 2 dargestellt.

Damit beispielsweise auch auf Mausklicks oder Tastatureingaben oder sogar eine Gestensteuerung eines Benutzers reagiert werden kann, kann es vorgesehen sein, den Datensatz von dem Web-Server 6 des Computernetzwerks 14 mit einem Skript bzw. ähnlichen entsprechenden Eingabemitteln zu ergänzen. So können die Mausklicks an den Web-Server 6 des sicherheitskritischen Computernetzwerks 14 übertragen und von dort an das externe Computersystem 16 ausgegeben werden. Das Programm, das auf dem externen Computersystem 16 oder dessen Computerarbeitsplatz 18 ausgeführt wird, wertet diese Mausklicks aus und folgt dem angeklickten Link. Es lädt dann die entsprechende Webseite und liefert diese wieder als Bild konvertiert an den die Webseite 2 anfordernden Computerarbeitplatz 4 des Computernetzwerks 14 zurück, wodurch auch ein Abrufen von dynamischen Inhalten sowie ein gewisser Surf-Komfort erzielt werden können.

Auf diese Weise wird der aus dem Internet 12 geladene Inhalt inkl. allfälliger Viren und Würmer ausserhalb des Computernetzwerks 14 der kritischen Infrastruktur 10 durch das Programm verarbeitet. Da dieses Programm auch nicht Teil der kritischen Infrastruktur 10 bzw. dessen Computernetzwerk 14 ist, kann dieses Programm auch ohne grössere Kosten und Schwierigkeiten bei der Zulassung aktuell gehalten werden. Durch dieses stets aktuell haltbare Programm ist es dann auch möglich neuere Technologien anzuzeigen, die von einem veralteten Browser im Computernetzwerk 14 nicht verstanden werden würden. Durch die Umsetzung der Darstellung auf ein Bildformat entsteht daher eine vollständige Entkopplung des von dem Internet 12 geladenen Inhalts, so dass es erheblich erschwert ist, über diesen Weg eine Attacke auf das Computernetzwerk 14 der kritischen Infrastruktur 10 auszuüben.

## Patentansprüche

1. Verfahren zur Darstellung von Web-Seiten (2) an einem Computerarbeitsplatz (4) eines Computernetzwerks (14) zur Steuerung und/oder Bedienung einer kritischen Infrastruktur (10), umfassend die folgenden Verfahrensschritte:
a) Aufrufen eines Web-Browsers an dem Computerarbeitsplatz (4) und Anwahl einer gewünschten Web-Seite;
b) Übermitteln der Anwahl von einem Web-Server (6) des Computernetzwerkes (14) an ein externes Computersystem (16) ;
c) Ausführen eines Programms auf dem externen Computersystem (16), das die der Anwahl zugeordnete Seite aus dem Internet lädt, in einen in einer pixel-oder vektorbasierten Seitenbeschreibungssprache kodierten Datensatz transformiert und den Datensatz an den Web-Server (6) des Computernetzwerkes (14) überträgt; und
d) Darstellen des Datensatzes auf eines Anzeigegerät des Computerarbeitsplatzes (4).

2. Verfahren nach Anspruch 1,
**dadurch gekennzeichnet, dass**
der Datensatz von dem Web-Server (6) des Computernetzwerks (14) mit einem Skript ergänzt wird.

3. Verfahren nach Anspruch 1 oder 2,
**dadurch gekennzeichnet, dass**
die vektorbasierte Seitenbeschreibungssprache nach dem Portable Document Format - kurz auch "PDF" genannt kodiert.

4. Verfahren nach einem der Ansprüche 1 bis 3,
**dadurch gekennzeichnet, dass**
die Anwahl einer gewünschten Web-Seite durch die Eingabe eines die gewünschte Web-Seite repräsentierenden Zeichenstrings oder durch das Anklicken eines Links oder Auswahl eines Favoriten oder die Einbindung der gewünschten Web-Seite als Teil einer anderen Web-Seite und deren Aufruf vorgenommen wird.
